# EUROPÄISCHE PATENTSCHRIFT

(11) **EP 4 227 064 B1**
(45) Veröffentlichungstag und Bekanntmachung des Hinweises auf die Patenterteilung: **23.10.2024**
(21) Anmeldenummer: 22156128.5
(22) Anmeldetag: 10.02.2022
(51) Int. Cl.: B29C 48/76, B29C 48/25, B29C 48/285

(54) **EXTRUDER MIT FILTERELEMENT**
EXTRUDER WITH FILTER ELEMENT
EXTRUDEUSE POURVUE D'ÉLÉMENT FILTRANT

(43) Veröffentlichungstag der Anmeldung: 16.08.2023
(73) Patentinhaber: Feddem GmbH & Co. KG, 53489 Sinzig (DE)
(72) Erfinder: Constroffer, David, 53489 Bad Breisig (DE); Groß, Dieter, 64319 Pfungstadt (DE)
(74) Vertreter: Meyer, Ludgerus

(56) Entgegenhaltungen:
- EP-B1- 1 400 337
- EP-B1- 2 218 568
- DE-U1- 202012 001 277
- DE-U1- 202014 001 484

## Beschreibung

Die Erfindung betrifft einen Extruder zur Verarbeitung von pulverförmigem Schüttgut mit einem Filterelement nach dem Oberbegriff des Anspruchs 1.

Ein Extruder zum Herstellen und Verarbeiten von Polymeren enthält in seinem Einzugsbereich in der Regel einen Gehäuseabschnitt, in dem ein austauschbares Filterelement aufgenommen ist, über das flüchtige Anteile von pulverförmig zugeführtem Schüttgut abgesaugt werden können. Ein solches Filterelement ist häufig als poröse Platte oder als Sieb ausgeführt. Ein Problem besteht häufig darin, dass ein solches Filterelement leicht verstopfen kann.

Ein Lösungsansatz besteht darin, über einen Absaugkanal des gasdurchlässigen Gehäuseabschnitts, aus dem die flüchtigen Anteile abgesaugt werden, einen umgekehrten Gasdruck-Stoß auf das Filterelement auszuüben, um die gegen die Schneckenwelle(n) des Extruders gerichtete Vorderseite des Filterelements von dem dort abgelagerten Pulverkuchen zu befreien. Eine weitere Möglichkeit besteht darin, den Pulverkuchen mechanisch abzutragen, was jedoch nur in Produktionspausen möglich ist.

In der DE1729395B ist ein Extruder angegeben, der das Grundprinzip einer Entlüftung des Einzugsbereichs des Extruders offenbart. Dort ist eine Entlüftungsöffnung angegeben, die mit einem Sieb mit enger Teilung versehen ist, das als Sintermetallplatte ausgebildet ist. Zur Vermeidung, dass Pulver aus der Entlüftungsöffnung hinausgesaugt wird, weist das Sieb einen größeren Abstand von der Schneckenwelle auf, wodurch sich ein Polster ausbilden kann, das als Feinstfilter wirkt. Die Filtereigenschaft des Polsters hängt dabei erheblich von der Korngröße und den Eigenschaften des Pulvermaterials ab. Mit anwachsendem Polster verringert sich aber die Filterleistung.

Die DE3310676A1 nennt zur Filterung eine poröse Platte mit Porenöffnungen von 5 - 200 µm in Form einer Sintermetallplatte und einer Porosität von 25 - 60 %, bei dem die Platte einen Abstand zur Schneckenwelle aufweist, der der Hälfte des Abstands von Schneckenwelle zur Innenseite des Extruder-Gehäuses entspricht.

In der DE202007011767U1 bzw. der EP1977877B1 ist ein Extruder angegeben, bei dem eine Entgasungsöffnung vorgesehen ist, die mit einem aus Sintermetall gebildeten Filterelement versehen ist, das unter Bildung eines Spalts mit einer Dicke von 2 mm - 30 mm von der Schneckenwelle beabstandet ist. Der sich in dem Spalt aufbauende Filterkuchen lässt sich hier über einen durch eine Druck-Spül-Leitung zugeführten Druckimpuls entfernen.

Die EP1400337B1 offenbart eine Entgasungsöffnung in einem Extruder, in der eine Metalldrahtgewebe-Verbundplatte mit zwei oder mehr Lagen befestigt ist, wobei sich auf einer grob gewebten, großmaschigen Trägerschicht immer engmaschigere Lagen, mit der engmaschigsten Lage auf der produktbezogenen Seite, befinden. Die Maschenweite der engmaschigsten Lage beträgt 1 µm bis 500 µm. Die Schichten der Metalldrahtgewebe-Verbundplatte können versintert sein. Eine Reinigung der Verbundplatte kann mittels Rückspülen, Abbürsten oder Ausglühen erfolgen.

Die EP2218568B1 offenbart einen Extruder mit einer Entgasungsöffnung, in der ein Einsatz mit einer Filtereinheit aufgenommen ist, die eine Filterfeinheit von 1 µm bis 10 µm aufweist und als Metall-Vlies ausgebildet ist, das über einen Stützkörper und ein Drainagegewebe gegenüber einem Grundkörper abgestützt ist.

In der DE102013208993B4 ist ein Filtereinsatz für einen Extruder angegeben, bei dem dem Filterelement ein Schutzelement vorgesetzt ist, das mindestens zwei separate Schutzbereiche mit Durchgangsöffnungen aufweist, wobei jedem Schutzbereich ein Zentralkanal zur Gaszuführung zugeordnet ist, um eine getrennte Druckspülung zu ermöglichen.

Die DE202012001277U1 offenbart einen Extruder zur Verarbeitung von pulverförmigem Schüttgut, bei dem im Gehäuse des Extruders ein Gehäuseabschnitt ausgebildet ist, in dem ein an einem Trägerrahmen angeordnetes Filterelement aufgenommen ist. Der Trägerrahmen ist an dem Extruder-Gehäuse lösbar befestigt. Das Filterelement weist eine Filterschicht mit einer Maschenweite von < 1 µm auf und enthält eine rückseitige Trägerschicht. Mittels des Trägerrahmens kann das Filterelement aus dem Gehäuseabschnitt entfernt werden.

Es besteht Bedarf an weiteren Verbesserungen und Vereinfachungen der Filtereinrichtung eines Extruders.

Der Erfindung liegt die Aufgabe zugrunde, einen Extruder mit einem Filterelement auszustatten, das eine verkleinerte Maschenweite aufweist, das einfach aufgebaut ist und bei dem keine regelmäßige Rückspülung der Filterseite erforderlich ist.

Diese Aufgabe wird durch die in den Ansprüchen angegebene Erfindung gelöst. Vorteilhafte Weiterbildungen der Erfindung sind in Unteransprüchen offenbart.

Die Erfindung geht aus von einem Extruder der im Oberbegriff des Anspruchs 1 angegebenen Art.

Gemäß der Erfindung weist das aus miteinander verbundenen Schichten von gesinterten Metalldrahtsieben gebildete Filterelement in der Filterschicht vorzugsweise eine Maschenweite von < 1 µm auf, wobei die Filterschicht zwischen einer der Schnecke zugewandten Schutzschicht und einer rückwärtigen Trägerschicht gehalten ist. Die Schutzschicht ist in einem Sicherheitsabstand von 0,5 - 2 mm von dem Außendurchmesser der Schnecke entfernt gehalten. Das Filterelement ist an einer Halterung befestigt und damit aus dem gasdurchlässigen Wandabschnitt entfernbar.

Das bei der Erfindung verwendete Filterelement besteht vorzugsweise nur aus drei Schichten, nämlich einer weitmaschigen Schutzschicht, die eine Beschädigung der eigentlichen Filterschicht verhindert, insbesondere wenn diese eine extrem kleine Maschenweite von unter 1 µm aufweist und entsprechend empfindlich ist. Die Rückseite der Filterschicht ist mit einer Trägerschicht versehen, um die Filtereinheit zu stabilisieren. Die Verbindung der Schichten und der Aufbau des Filterelements der Schichten sind durch Versinterung der Schichten selbst sowie durch ihre Verbindung untereinander erfolgt.

Da sich beim Gegenstand der Erfindung kein relevanter Filterkuchen ausbildet, dient das Vorsehen eines Sicherheitsabstandes lediglich der Absicherung gegenüber Toleranzen des Umfangs der Schnecke sowie Toleranzen im Gehäuseaufbau des Extruders.

Das aus den angegebenen Schichten gebildete Filterelement ist selbsttragend und formstabil ausgebildet. Um es zur Wartung aus dem Extruder-Gehäuse entnehmen zu können, ist es durch Herauslösen der das Filterelement tragenden Halterung aus dem gasdurchlässigen Wandabschnitt entfernbar.

Die radiale Position der Halterung im Extruder-Gehäuse gegenüber der Schnecke ist vorzugsweise einstellbar ausgebildet. Insbesondere kann die Einstellbarkeit dadurch realisiert werden, dass die Halterung mittels einer einstellbaren Verschraubung zwischen der Halterung und einer an dem Extruder-Gehäuse lösbar befestigten Deckelplatte einstellbar ist.

Das Filterelement ist an der Halterung vorzugsweise mittels Befestigungsleisten angeschraubt oder angeklemmt. Die Befestigungsleisten dienen der ortsfesten Anordnung des Filterelements und zum Zusammendrücken einer Dichtung zwischen dem Filterelement und der Halterung zur Vermeidung von Verziehen und Verlagern des Filterelements aufgrund hoher Scherkräfte während des Betriebs des Extruders. Die Befestigungsleisten erlauben auch eine einfache Trennung des Filterelements von der Halterung. Alternativ zu Befestigungsleisten oder Klemmleisten kann auch ein das Filterelement aufnehmender selbsttragender Klemmrahmen ohne Schraubenbefestigung vorgesehen sein.

Die Absaugung der die Filterschicht durchströmenden Gase erfolgt vorzugsweise über eine Bohrung in der Verschraubung, an die über eine Kupplung ein Absaugkanal anflanschbar ist. Die Bohrung der Verschraubung führt in einen Hohlraum in der Halterung auf der Rückseite der Filterschicht.

Um zu verhindern, dass durch Spalte zwischen Halterung und der Deckelplatte des gasdurchlässigen Gehäuseabschnitts im Extruder-Gehäuse Gase entweichen können, weist die Halterung vorzugsweise eine umlaufende Dichtung auf. Es können auch bis an den umlaufenden Gehäuseabschnitt reichende Flachdichtungen zwischen Halterung und Filterschicht vorgesehen sein, um auch dort eine gasdichte Abdichtung herzustellen.

Die Erfindung wird nachstehend an Hand eines Ausführungsbeispiels näher erläutert.

Es zeigen:
- Fig. 1: eine vereinfachte perspektivische Ansicht eines Einsatzteils zur Aufnahme eines Filterelements,
- Fig. 2: eine Explosionszeichnung des Einsatzteils,
- Fig. 3: eine Querschnittsansicht des Einsatzteils, und
- Fig. 4: eine mikroskopische Ansicht auf die Filterschicht von der oder den Schnecken aus gesehen.

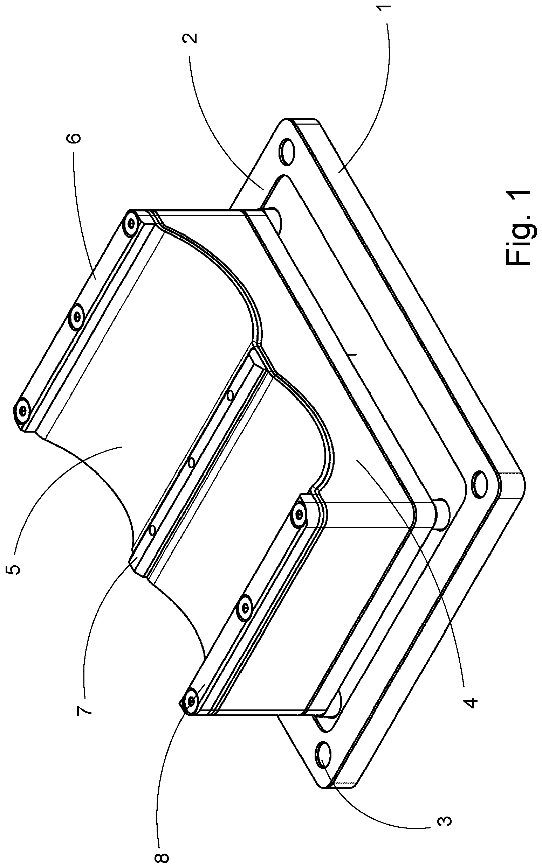

Ein in Figur 1 gezeigtes im Wesentlichen quaderförmig ausgeführtes Einsatzelement ist so ausgebildet, dass es in einen Gehäuseabschnitt des Einzugsbereichs eines Extruders einsetzbar ist. Es weist eine mit einem Gasdurchlass versehene Deckelplatte 1 auf, die entweder mittels einer Verschraubung über eckseitige Bohrlöcher 3 auf einem Randabschnitt des gasdurchlässigen Wandabschnitts des Extruder-Gehäuses befestigt werden kann, oder die auf einem rückspringenden Absatz im Wandbereich des Wandabschnitts aufliegt und daran mittels Schrauben befestigt ist, wodurch die Oberfläche der Deckelplatte in der Ebene der Außenseite des Extruder-Gehäuses verlaufen kann.

Zwischen der Deckelplatte 1 und dem Extruder-Gehäuse befindet sich eine Flachdichtung 2 zur Abdichtung der Deckelplatte 1 gegen das Extruder-Gehäuse.

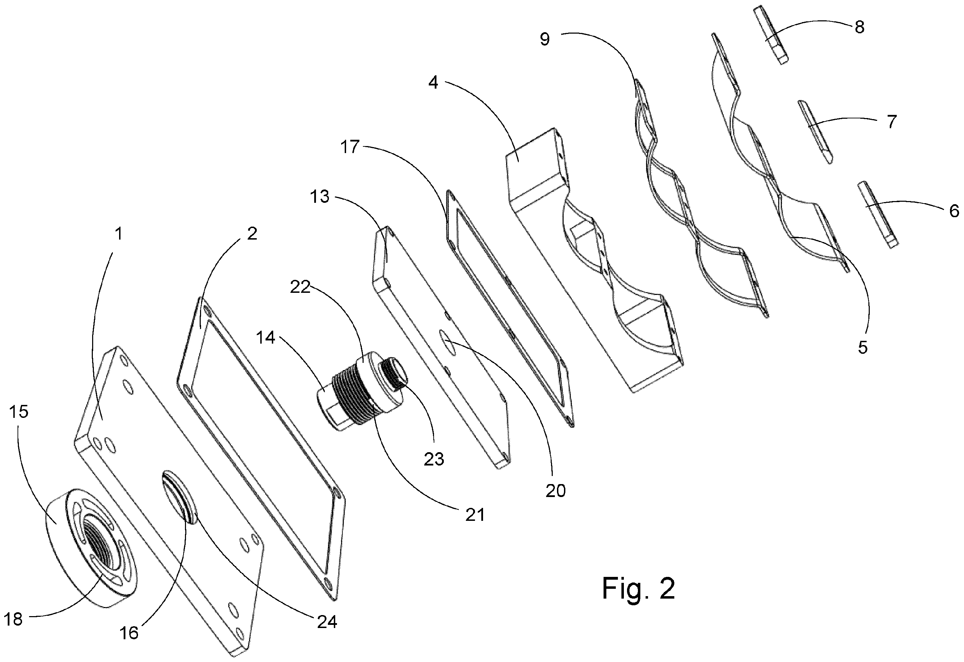

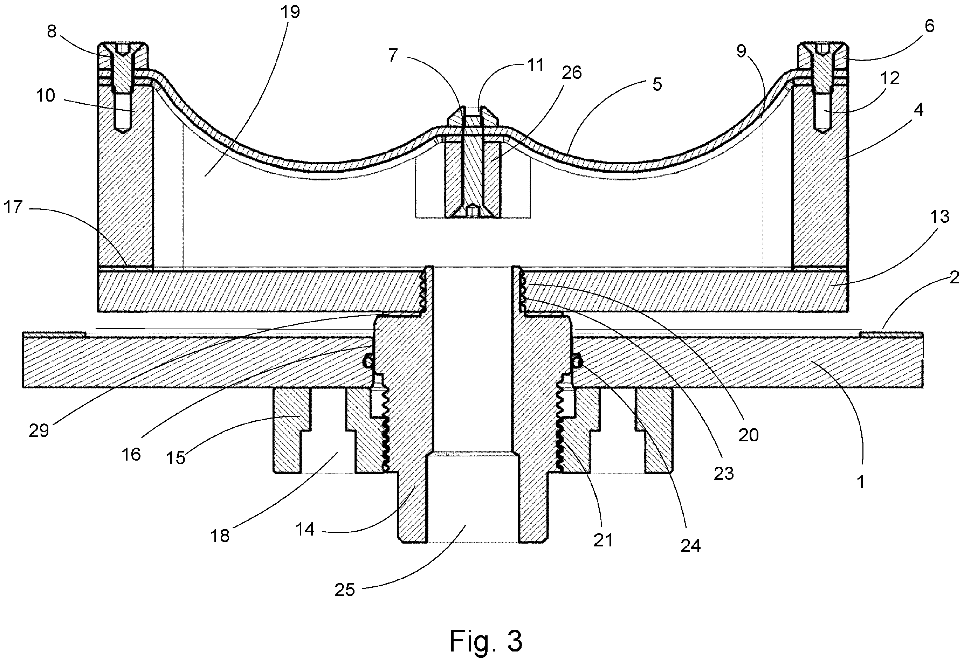

Eine in den Figuren 2 und 3 im Detail dargestellte Verschraubung 14 verbindet die Deckelplatte 1 über einen Filterdeckel 13 mit einem Trägerrahmen 4. Der Trägerrahmen 4 weist für einen Doppelschnecken-Extruder stirnseitig doppelt gebogene Seitenwände auf, deren Bogenform Teilbögen darstellt, die konzentrisch zum Umfang von zwei in einem Doppelextruder angeordneten Schnecken verlaufen. Die gegen die Schnecken gerichtete Stirnseite des Filterelements 5 liegt in Radialrichtung der Schnecken über eine Dichtung 9 randseitig auf den bogenförmigen Seitenwänden und in Axialrichtung der Schnecken auf geraden Randabschnitten des Trägerrahmens 4 auf und ist mittels Klemmleisten 6, 7, 8 an dem Trägerrahmen 4 befestigt.

Bei Ansetzen des Filterelements an die Schnecken liegt die Filterstruktur eng an dem Umfangsverlauf der Schnecken an.

Figur 2 zeigt eine Explosionsansicht des Einsatzelements zum Einsetzen in ein Extruder-Gehäuse. Die Deckelplatte 1 weist eine zentrale Bohrung 16 auf, in der sich eine Ringdichtung 24 befindet, die gegen einen glattzylindrischen Bereich 22 der Verschraubung 14 gerichtet ist, die durch die Bohrung 16 geführt ist. Das vordere Ende der Verschraubung 14 trägt ein Außengewinde 23, über das die Verschraubung 14 in ein Innengewinde 20 eines plattenförmigen Filterdeckels 13, der den rückwärtigen Teil des Trägerrahmens 4 bildet, einschraubbar ist.

An das Gewinde 23 der Verschraubung 14 schließt sich der vergrößerte Absatz 22 an, auf dem der darauf aufgesetzten Deckelplatte 1 in Axialrichtung verschiebbar ist. An der Stirnseite des Absatzes 22 befindet sich eine Flachdichtung 29. Im axial mittleren Bereich der Verschraubung 14 ist ein Außengewinde 21 ausgebildet. Sobald die Verschraubung über das Gewinde 23 an dem Filterdeckel 13 befestigt ist und die Deckelplatte 1 mit der Bohrung 16 auf den vergrößerten Absatz 22 aufgeschoben ist, kann auf das Gewinde 21 eine Kontermutter 15 aufgeschraubt werden, die in Abhängigkeit von der axialen Stellung der Kontermutter auf dem Gewinde 21 die Positionierung des Trägerrahmens 4 in Bezug auf die Deckelplatte 1 ermöglicht.

Die axiale Position der Verschraubung 14 und damit der Position der Filtereinheit, die den Filterdeckel, den Trägerrahmen und das Filterelement umfasst, lässt sich gegenüber der Deckelplatte 1 in Bezug auf die Schnecken arretieren. Dies lässt sich dadurch erreichen, dass die Kontermutter 15 über Klemmschrauben, die durch in Umfangsrichtung der Kontermutter 15 verlaufende Schlitze 18 durch die Kontermutter 15 geführt und in die Deckelplatte 1 eingeschraubt werden, gegenüber der Deckelplatte 1 fixiert werden kann. Wenn die Klemmschrauben wieder gelöst werden, lässt sich die Kontermutter verdrehen und damit die Position der gesamten Filtereinheit bezüglich der Deckelplatte 1 verändern.

Zur Verdrehsicherung des Trägerrahmens 4 gegenüber der Deckelplatte 1 können an der Deckelplatte 1 oder dem Trägerrahmen 4 befestigte Führungsstifte verwendet werden, die in Sacklöcher des gegenüberliegenden Trägerrahmens 4 bzw. der Deckelplatte 1 eingeführt sind.

Die Verschraubung 14 ist als Hohlschraube mit einer Bohrung 25 ausgebildet. An der Außenseite der Verschraubung ist an die Bohrung 25 eine Schnellverschlusskupplung eines Gasabführkanals oder Schlauches anflanschbar.

Das vordere offene Ende der Verschraubung 14 ragt in den Innenraum 19 des Trägerrahmens 4 hinein, so dass über die Verschraubung 14 ein Gasführungskanal in den Innenraum 19 des Trägerrahmens gebildet ist.

Zur Abdichtung des Innenraums des Filterelements gegenüber der Umgebungsluft des Extruders dienen die Ringdichtung 24 und die Flachdichtungen 2 und 17.

Die Flachdichtung 17 ist zwischen Filterdeckel 13 und Trägerrahmen 4 angeordnet. Der Trägerrahmen ist aus zwei Längswänden und zwei Querwänden gebildet, wobei die Querwände für einen Doppelwellen-Extruder doppelt gebogene und für eine Einwellen-Extruder einfach gebogene Stirnseiten-Oberflächen aufweisen, während die Längswände im Wesentlichen rechteckig mit ebenen Stirnseiten-Oberflächen ausgeführt sind.

Auf die umlaufenden Oberflächen des Trägerrahmens 4 ist das Filterelement, das eine den umlaufenden Oberflächen entsprechende Form aufweist, aufgebracht. Es wird an den Oberflächen mit Hilfe von Schrauben, die durch die längs verlaufenden Klemmleisten 6, 7, 8 in Sacklöcher 10, 11,12 der Seitenwände bzw. eines Mittelstegs 26 geführt sind, befestigt. Zur Abdichtung zwischen Filterelement 5 und Trägerrahmen 4 ist eine der Form des Filterelementes 5 folgende Flachdichtung 9 zwischen dem Filterelement 5 und den stirnseitigen Oberflächen des Trägerrahmens 4 vorgesehen.

Der Hohlraum 19 zwischen der Rückseite des Filterelements 5, den Innenseiten des Trägerrahmens 4 und dem Filterdeckel 13 steht über die Bohrung 25 in der Verschraubung 14 mit einem Absaugkanal in direkter Verbindung, so dass über das Filterelement 5 in den Hohlraum 19 eintretende Gase problemlos abgesaugt werden können.

Das Filterelement ist selbsttragend steif ausgebildet. Es enthält im Wesentlichen drei Schichten, nämlich eine vorderseitigen Sicherungsschicht 27, eine Filterschicht 28 und eine rückseitige Trägerschicht. Alle drei Schichten sind als gesinterte Metallsiebschichten ausgebildet, wobei die Filterschicht 28 eine Maschenweite von < 1 µm, vorzugsweise 0,5 µm aufweist. Die Sicherungsschicht 27 weist eine Maschenweite von etwa dem 20 - 100 fachen der Filterschicht 28 auf, während die Trägerschicht vorzugsweise ebenfalls eine Maschenweite von 20 - 100 µm enthält. Die Trägerschicht kann zur Erhöhung der Steifigkeit auch aus mehreren miteinander versinterten Schichten mit unterschiedlicher Maschenweite gebildet sein.

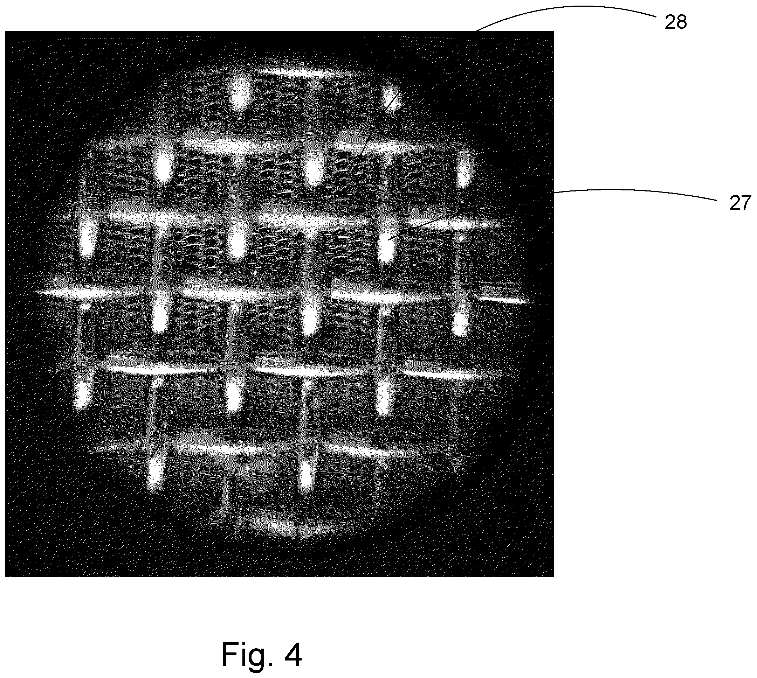

Figur 4 zeigt eine mikroskopische Aufnahme des Filterelements, die die Sicherungsschicht 27 und die darunter liegende Filterschicht 28 zeigt. Die Stärke der Sicherungsschicht 27 ist derart klein, dass die Filterschicht 28 in einem Abstand von 0,5 - 2 mm von dem Verlauf des Außenumfangs der Schnecken angeordnet sein kann. Damit wird erreicht, dass sich praktisch kein Filterkuchen zwischen Filterschicht und Außenumfang der Schnecken ausbilden kann. Somit ist auch weder ein Druckimpuls durch die Filterschicht zum Abbau eines Filterkuchens noch ein Abbürsten erforderlich. Dies vergrößert die Standzeit des Extruders und vermeidet Stillstandzeiten.

Eine genaue Abstandseinstellung der Filterschicht 28 gegenüber dem Umfangsverlauf der Schnecken lässt sich durch geeignete Einstellung der Verschraubung 14 erreichen.

Die Erfindung ist nicht auf den Einsatz an Doppelschnecken-Extrudern beschränkt, sondern kann bei angepasster Form in gleicher Weise auch bei Einfachschnecken-Extrudern verwendet werden.

### Bezugszeichen

- 1: Deckelplatte
- 2: Flachdichtung
- 3: Bohrung
- 4: Trägerrahmen
- 5: Filterelement
- 6: Klemmleiste
- 7: Klemmleiste
- 8: Klemmleiste
- 9: Flachdichtung
- 10: Bohrung
- 11: Bohrung
- 12: Bohrung
- 13: Filterdeckel
- 14: Verschraubung
- 15: Kontermutter
- 16: Bohrung
- 17: Flachdichtung
- 18: Schlitze
- 19: Hohlraum
- 20: Innengewinde
- 21: Außengewinde
- 22: Absatz
- 23: Gewinde
- 24: Ringdichtung
- 25: Bohrung
- 26: Mittelsteg
- 27: Sicherungsschicht
- 28: Filterschicht
- 29: Flachdichtung

## Patentansprüche

1. Extruder zur Verarbeitung von pulverförmigem Schüttgut, mit einem Extruder-Gehäuse, das wenigstens eine axial gerichtete Bohrung mit einer Innenwand und einer in der Bohrung aufgenommenen Schnecke aufweist, wobei in einem Einzugsbereich des Extruder-Gehäuses wenigstens ein Gehäuseabschnitt ausgebildet ist, in dem ein an einem Trägerrahmen (4) angeordnetes Filterelement (5) zur Absaugung gasförmiger Bestandteile des Schüttguts aufgenommen ist, wobei der Trägerrahmen (4) an dem Extruder-Gehäuse lösbar befestigt ist, **dadurch gekennzeichnet,**
- **dass** das Filterelement (5) aus miteinander verbundenen Schichten von versinterten Metalldrahtsieben gebildet ist,
- **dass** das Filterelement (5) wenigstens eine gegen die Schnecke gerichtete Sicherungsschicht (27) mit einer Maschenweite von 20 - 100 µm, eine Filterschicht (28) mit einer Maschenweite von < 1 µm und eine rückwärtige Trägerschicht enthält, wobei die Sicherungsschicht (27) in einem Sicherheitsabstand von 0,5 - 2 mm von dem Außendurchmesser der Schnecke entfernt angeordnet ist, und
- **dass** das Filterelement (5) mit Hilfe des Trägerrahmens (4) aus dem Gehäuseabschnitt entfernbar ist,
wobei das Filterelement (5) selbsttragend und formstabil ausgebildet ist.

2. Extruder nach Anspruch 1, **dadurch gekennzeichnet, dass** die Position des Trägerrahmens (4) im Extruder-Gehäuse radial zu der wenigstens einen Bohrung des Extruders einstellbar ist.

3. Extruder nach Anspruch 2, **dadurch gekennzeichnet, dass** der Trägerrahmen (4) mittels einer einstellbaren Verschraubung (14) zwischen Trägerrahmen (4) und einer an dem Extruder-Gehäuse lösbar befestigten Deckelplatte (1) in Radialrichtung der Extruder-Schnecke oder den Bohrungen für die Extruder-Schnecken einstellbar ist.

4. Extruder nach Anspruch 1, **dadurch gekennzeichnet, dass** das Filterelement (5) mittels in Axialrichtung des Extruders verlaufender Klemmleisten (6, 7, 8) oder einem Klemmrahmen an dem Trägerrahmen (4) befestigt ist.

5. Extruder nach Anspruch 3, **dadurch gekennzeichnet, dass** die Verschraubung (14) eine in Axialrichtung der Verschraubung verlaufende Bohrung (25) zum Anschluss eines Absaugkanals aufweist.

6. Extruder nach Anspruch 1, **dadurch gekennzeichnet, dass** das Filterelement (5) über eine randseitige Dichtung (9) an dem Trägerrahmen (4) befestigt ist.

## Claims

1. An extruder for processing pulverulent bulk material, comprising an extruder housing which has at least one axially directed bore with an inner wall and a screw accommodated in the bore, at least one housing portion, which accommodates a filter element (5) for suctioning gaseous constituents of the bulk material, located on a support frame (4), being configured in a feed region of the extruder housing, the support frame (4) being detachably fastened to the extruder housing, **characterized in that**
- the filter element (5) is formed from interconnected layers of sintered metal wire mesh screens,
- the filter element (5) contains at least one protective layer (27) which is directed against the screw and has a mesh size of 20 - 100 µm, a filter layer (28) having a mesh size of < 1 µm, and a rear support layer, the protective layer (27) being located at a safety distance of 0.5 - 2 mm from the outer diameter of the screw, and
- the filter element (5) can be removed from the housing portion with the aid of the support frame (4), the filter element (5) being self-supporting and dimensionally stable.

2. The extruder according to Claim 1, **characterized in that** the position of the support frame (4) in the extruder housing can be adjusted radially to the at least one bore of the extruder.

3. The extruder according to Claim 2, **characterized in that** the support frame (4) can be adjusted by means of an adjustable screw connection (14) between the support frame (4) and a cover plate (1) detachably fastened to the extruder housing in the radial direction of the extruder screw or the bores for the extruder screws.

4. The extruder according to Claim 1, **characterized in that** the filter element (5) is fastened to the support frame (4) by means of clamping strips (6, 7, 8) running in the axial direction of the extruder or a clamping frame.

5. The extruder according to Claim 3, **characterized in that** the screw connection (14) has a bore (25) running in the axial direction of the screw connection for connecting a suction channel.

6. The extruder according to Claim 1, **characterized in that** the filter element (5) is fastened to the support frame (4) via a circumferential seal (9).

## Revendications

1. Extrudeuse destinée au traitement de matériau en vrac sous forme de poudre, présentant un bâti d'extrudeuse, qui présente au moins un trou orienté axialement, pourvu d'une paroi interne, et une vis sans fin logée dans le trou, au moins une section de bâti étant réalisée dans une zone d'introduction du bâti d'extrudeuse, dans laquelle est logé un élément filtrant (5), agencé sur un cadre support (4), destiné à aspirer les constituants gazeux du matériau en vrac, le cadre support (4) étant fixé de manière amovible au bâti d'extrudeuse, **caractérisée**
- **en ce que** l'élément filtrant (5) est formé à partir de couches de toiles métalliques reliées les unes aux autres,
- **en ce que** l'élément filtrant (5) contient au moins une couche de protection (27) orientée vers la vis sans fin, présentant une largeur de maille de 20 - 100 µm, une couche filtrante (28) présentant une largeur de maille < 1 µm et une couche support arrière, la couche de protection (27) étant agencée à une distance de sécurité de 0,5 - 2 mm par rapport au diamètre externe de la vis sans fin et
- **en ce que** l'élément filtrant (5) peut être enlevé de la section de bâti à l'aide du cadre support (4),
l'élément filtrant (5) étant réalisé de manière autoportante et de forme stable.

2. Extrudeuse selon la revendication 1, **caractérisée en ce que** la position du cadre support (4) dans le bâti d'extrudeuse peut être réglée radialement par rapport audit au moins un trou de l'extrudeuse.

3. Extrudeuse selon la revendication 2, **caractérisée en ce que** le cadre support (4) peut être réglé au moyen d'un vissage (14) réglable entre le cadre support (4) et une plaque couvercle (1) fixée de manière amovible sur le bâti d'extrudeuse, dans la direction radiale de la vis sans fin d'extrudeuse ou des trous pour les vis sans fin d'extrudeuse.

4. Extrudeuse selon la revendication 1, **caractérisée en ce que** l'élément filtrant (5) est fixé au cadre support (4) au moyen de barrettes de serrage (6, 7, 8) s'étendant dans la direction axiale de l'extrudeuse ou d'un cadre de serrage.

5. Extrudeuse selon la revendication 3, **caractérisée en ce que** le vissage (14) présente un trou (25) s'étendant dans la direction axiale du vissage pour le raccord d'un canal d'aspiration.

6. Extrudeuse selon la revendication 1, **caractérisée en ce que** l'élément filtrant (5) est fixé au moyen d'un joint (9) côté bord au cadre support (4).
